# EUROPEAN PATENT APPLICATION

(11) **EP 4 746 319 A1**
(43) Date of publication of application: **20.05.2026**
(21) Application number: 25175915.5
(22) Date of filing: 13.05.2025
(51) Int. Cl.: H04H 60/74, H04H 20/93

(54) **METHOD OF TRANSMITTING RADIO DATA, DEVICE FOR TRANSMITTING RADIO DATA, METHOD OF RECEIVING RADIO DATA, AND DEVICE FOR RECEIVING RADIO DATA**

(30) Priority: 15.11.2024 KR 20240163100
(71) Applicant: Hyundai Mobis Co., Ltd., Gangnam-gu Seoul 06141 (KR)
(72) Inventor: LEE, Yong Joon, 16891 Yongin-si, Gyeonggi-do (KR)
(74) Representative: Jung, Minkyu

(57) **Abstract**

A radio data receiving device includes a memory, and a processor operatively connected to the memory, wherein the processor is configured to receive a zeroth stream based on a first frequency band about a radio data system (RDS), receive a first stream based on a second frequency band in which the RDS is extended, receive a second stream based on a third frequency band in which the RDS is extended, receive a third stream based on a fourth frequency band in which the RDS is extended, and provide a service about RDS data based on at least one of the first stream, the second stream, or the third stream.

## Description

Pursuant to 35 U.S.C. § 119(a), this application claims the benefit of earlier filing dates and right of priority to Korean Application No. 10-2024-0163100, filed on November 15, 2024, the contents of which are hereby incorporated by reference herein in their entirety.

### BACKGROUND OF THE DISCLOSURE

### Field of the Disclosure

Embodiments relate to a method of transmitting radio data, a device for transmitting radio data, a method of receiving radio data, and a device for receiving radio data.

### Discussion of the Related Art

A radio data system (RDS) refers to a system that transmits and receives radio data by a frequency modulation (FM) method.

A method of transmitting and receiving traffic information simply for listening to FM radio broadcast has limitations in that the method does not provide information specialized for a vehicle of a driver.

There is a need for a method of transmitting and receiving traffic information specialized for a vehicle of a driver.

Compatibility with FM radio broadcasting and personalized services for drivers are required.

A method of providing data specialized for a vehicle of a driver is needed to efficiently utilize an FM radio broadcast network.

### SUMMARY OF THE DISCLOSURE

Embodiments provide a method and device for transmitting and receiving radio data specialized for autonomous driving and various activities during driving.

Embodiments provide a real-time radio song lyrics provision system utilizing radio data system (RDS) 2 data broadcasting.

However, the scope of the embodiments is not limited to the technical objects described above, and the scope of the embodiments may be expanded to other technical objects to be inferred by those of skill in the art based on the entire described content.

A radio data receiving device includes a memory, and a processor operatively connected to the memory, wherein the processor is configured to receive a zeroth stream based on a first frequency band about a radio data system (RDS), receive a first stream based on a second frequency band in which the RDS is extended, receive a second stream based on a third frequency band in which the RDS is extended, receive a third stream based on a fourth frequency band in which the RDS is extended, and provide a service about RDS data based on at least one of the first stream, the second stream, or the third stream.

### BRIEF DESCRIPTION OF THE DRAWINGS

The drawings are provided to further understand the embodiments and illustrate embodiments together with the description related to the embodiments. For further understanding of the various embodiments described below, reference needs to be made to the following description of the embodiments in conjunction with the following drawings, in which like reference numerals refer to corresponding parts throughout the drawings.
FIG. 1 illustrates a radio data system (RDS) according to embodiments.
FIG. 2 illustrates an RDS extension (RDS2) according to embodiments.
FIG. 3 shows an RDS2 data type according to embodiments.
FIG. 4 shows an RDS2-based broadcast transmitting spectrum according to embodiments.
FIG. 5 illustrates a new service for radio data according to embodiments.
FIG. 6 illustrates a new service for radio data according to embodiments.
FIG. 7 illustrates a new service for radio data according to embodiments.
FIG. 8 illustrates a radio data receiving device according to embodiments.

### DETAILED DESCRIPTION OF THE DISCLOSURE

Reference will now be made in detail to the embodiments of the present disclosure with reference to the accompanying drawings. The detailed description, which will be given below with reference to the accompanying drawings, is intended to explain embodiments of the present disclosure, rather than to show the only embodiments that may be implemented according to the present disclosure. The following detailed description includes specific details in order to provide a thorough understanding of the present disclosure. However, it will be apparent to those skilled in the art that the present disclosure may be practiced without such specific details.

Most of the terms used in the embodiments are selected from those commonly used in the field, but some terms are arbitrarily selected by the applicant and their meanings are described in detail in the following description as necessary. Therefore, the examples need to be understood based on the intended meaning of the terms and not simply the names or meanings of the terms.

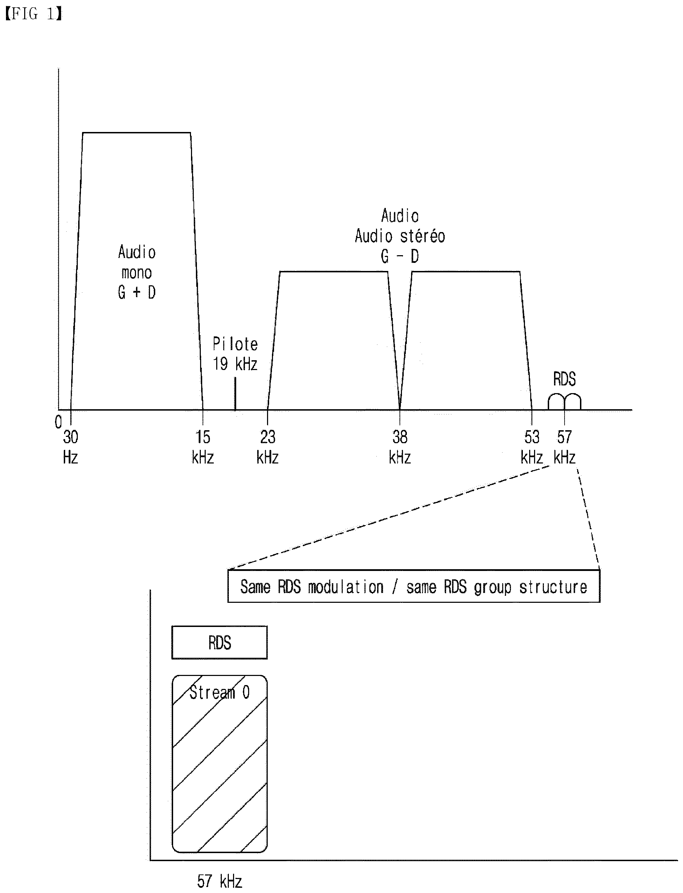

FIG. 1 illustrates a radio data system (RDS) according to embodiments.

Embodiments include a radio audio transmitting system. An analog radio system of the early 1900s have evolved into FM/AM technology. In the 1990s, when a technology standard called FM-RDS is established, data transmitting technology is additionally supplemented to an analog radio system, making it possible to display simple text. For example, it is possible to display song lyrics, album jackets, singer names, and broadcasting station names (BBC or KBS) on a terminal, and display the existing frequency (88.1 MHz or 90.1 MHz), and thus the displayed information is provided as a basic audio source for an entertainment system important to a driver in a vehicle.

The current radio system is not capable of providing textual lyrics for a song a driver currently listens to and providing detailed information about the lyrics being played in real time. There is a technology to provide real-time text in RDS, which is a European and international standard, but due to limitations in data bandwidth, the text is provided in a form that only displays a song title and a singer name. However, as autonomous driving, family activities, and vehicle activity time increase while driving, a time spent listening to the radio has increased. In this case, analog radio broadcasting technology (FM-RDS) has limitations in expressing the lyrics of the song currently being listened to or the lyrics of the song at that moment.

According to embodiments, song title and singer information of music being listened to in real time while listening to the radio may be provided. For example, embodiments may further provide song lyrics. Full information about the lyrics may be retrieved by transmitting a text-based uniform resource locator (URL) at 66.5 Khz, which is stream 1 of RDS2. According to embodiments, a text of real-time lyrics may be displayed in a specific color. For example, lyrics may be displayed as lines of text. Lines of lyrics may be transmitted based on a text at 71.25 Khz, which is stream 2 of RDS2 and displayed combined with the full song lyrics or may be displayed alone. Lyrics may be displayed as phoneme units of text. Phonemes may be transmitted based on a text at 76.00 Khz, which is stream 3 of RDS2 and displayed merged with the full song lyrics or may be displayed alone. To provide various radio data related additional services, embodiments may apply time synchronization. In a very short time, a spectrum related to streams 1 to 3 is located at the outermost edge and thus may be greatly affected by other frequencies. According to embodiments, due to this, various information about the song currently being listened to may be provided.

According to embodiments, when driving a family vehicle or listening to a song on the radio, the lyrics may be viewed and the song may be easily sung along. In this case, a system that responds to customer needs may be provided by providing a service for this, that is, free/paid services using FM-RDS.

Referring to FIG. 1, an example of an RDS broadcast transmitting spectrum is illustrated. Stream 0 including RDS data may be transmitted and received at a frequency of 57 kHz. The data included in stream 0 may be data with the same modulation applied and may have the same RDS group structure.

The data included in stream 0 may include songs and singers. However, it may be possible to transmit song data first, then singer information, and then song data again in chronological order. That is, the same data is repeatedly transmitted and received through stream 0 without time synchronization.

Therefore, there may be limitations in providing additional expansion services related to RDS data with only stream 0 of the RDS. Hereinafter, a method of transmitting and receiving RDS data based on an extended spectrum structure is described.

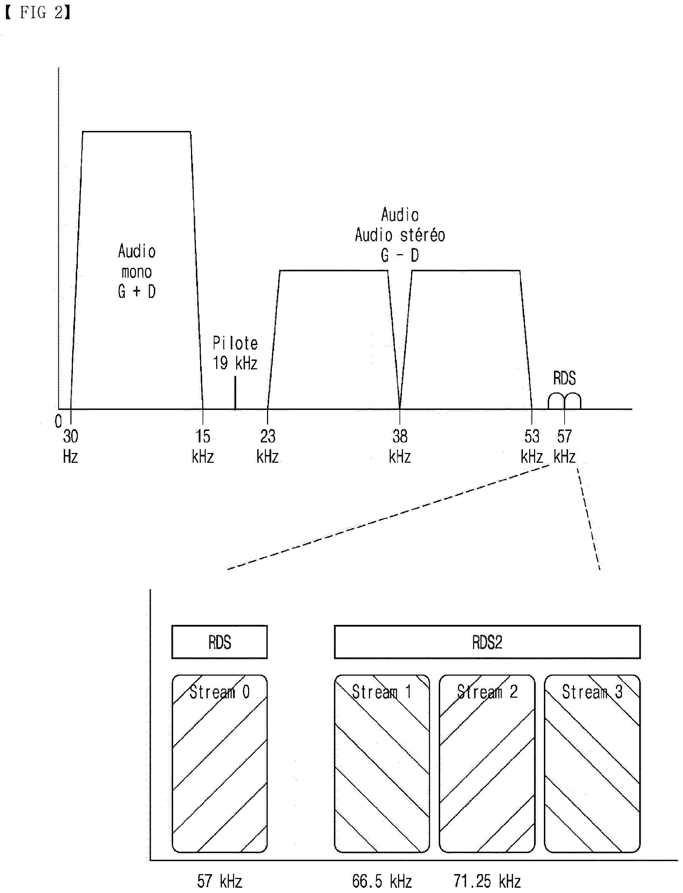

FIG. 2 illustrates a radio data system (RDS) extension (RDS2) according to embodiments.

FIG. 2 illustrates an RDS2 structure obtained by extending an RDS structure described with reference to FIG. 1. The RDS2 structure may transmit and receive additional streams on additional frequency bands. For example, it may be possible to transmit and receive stream 1 at 66.5 kHz, stream 2 at 71.25 kHz, and stream 3 at 76.0 kHz.

According to embodiments, additional information related to radio data may be provided to a user of a vehicle by using an RDS2 spectrum obtained by an RDS spectrum.

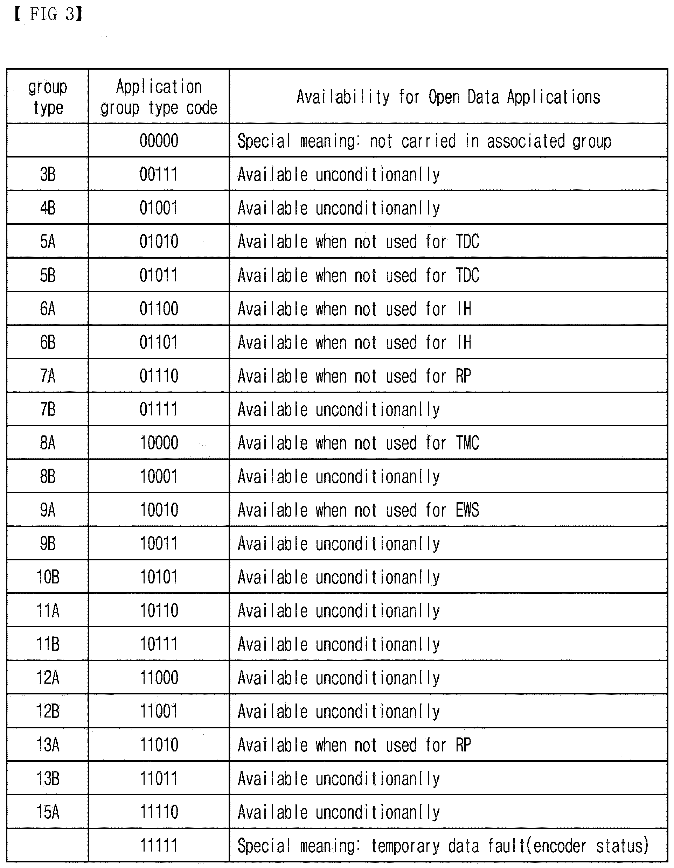

FIG. 3 shows an RDS2 data type according to embodiments.

FIG. 3 illustrates an open data channel and application identification method. According to embodiments, RDS data may be transmitted and received based on open data application (ODA). As shown in FIG. 3, the RDS data may be allocated based on an ODA group type value.

Extended RDS2 data according to embodiments may be defined as a new type value in a group type of FIG. 3, and an RDS service may be provided according to the ODA transmission standard. The RDS data is interpreted in the present disclosure to mean data of both RDS1 and RDS2 (extended structure).

For example, a group type value that identifies stream 1 of RDS2 in FIG. 2 may be added. A group type value that identifies stream 2 of RDS2 in FIG. 2 may be added. A group type value that identifies stream 3 of RDS2 in FIG. 2 may be added.

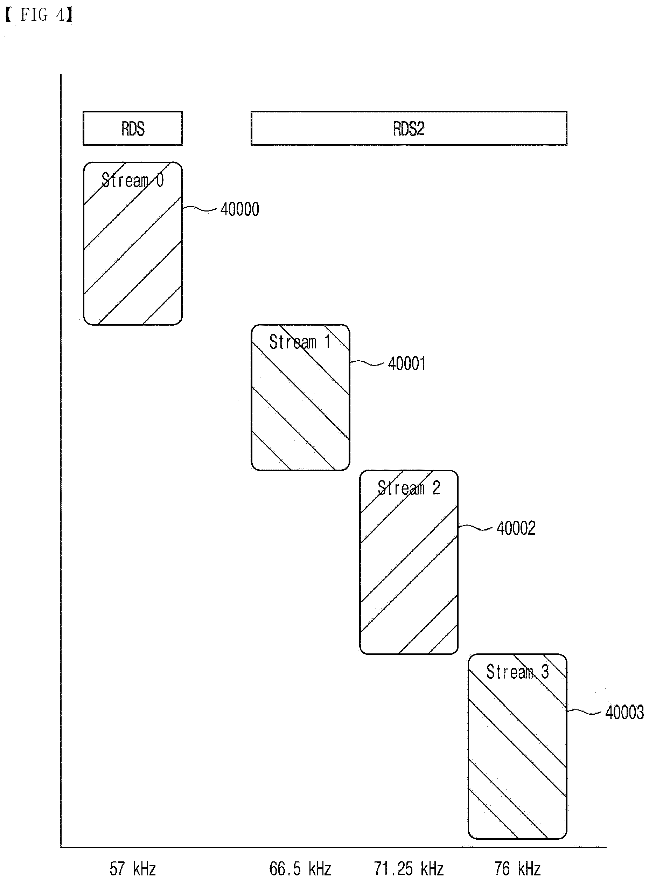

FIG. 4 shows an RDS2-based broadcast transmitting spectrum according to embodiments.

According to embodiments, the RDS data may be transmitted and received based on stream 0 at an RDS1 frequency (e.g., 57 kHz).

According to embodiments, the RDS data (additional data) may be transmitted and received based on streams 1 to 3 at RDS2 frequencies (e.g., 66.5 kHz, 71.25 kHz, or 76.0 kHz).

A stream 0 40000 may transfer an RDS service as shown in FIG. 1. Song titles and singer names may be repeatedly transmitted and received using the RDS service.

Streams 1 to 3 may transfer extended RDS data.

A stream 1 40001 may include a new service. For example, the stream may include a URL for the full lyrics to the current radio song (e.g., http://kbs.co.kr/radio/kbs1/radioprogram/singername-songtitle.html). According to embodiments, a page view that provides the full lyrics may be provided to a consumer by providing a URL to be accessed through 4G/LTE or 5G networks based on stream 1 in a hybrid form.

A stream 2 40002 may include a new service. For example, the stream may include a text by line of lyrics from a song currently listened to on the radio.

A stream 3 40003 may include a new service. For example, the stream may include time-synchronized information by transmitting tag information for the lyrics of a song currently listened to on the radio. According to embodiments, due to this, phoneme-level indices may be provided. The tag information according to embodiments may be expressed in ASCII code. The RDS data containing tags and lyric text may be transmitted via stream 3.

That is, the stream 1 may transfer the full lyrics of RDS data (in the case of a song), the stream 2 may transfer one line of lyrics of RDS data, and the stream 3 may transmit one syllable of one line of RDS data.

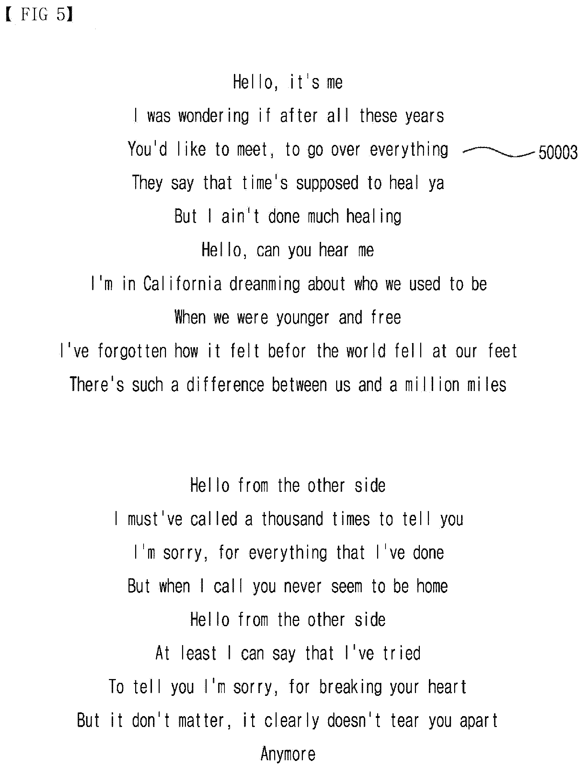

FIG. 5 illustrates a new service for radio data according to embodiments.

FIG. 5 illustrates a detailed example of the stream 1 described with reference to FIG. 4. The new service of the stream 1 may include a URL for the full lyrics to the current radio song as RDS data.

A radio data receiving device according to embodiments may receive extended RDS data on the RDS2 spectrum and display full lyrics 50003 in a vehicle based on URL of stream 0.

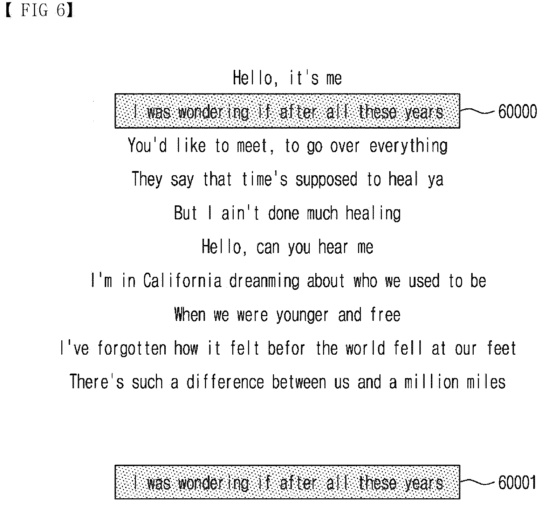

FIG. 6 illustrates a new service for radio data according to embodiments.

FIG. 6 illustrates a detailed example of the stream 2 described with reference to FIG. 4. The new service of the stream 2 may include a text 60000 of the lyrics of the song currently listened to on the radio, which is RDS data.

There are two methods to provide the text 60000 per line.

For example, when receiving information on the full song lyrics over a network, a radio data receiving device according to embodiments may combine the text 60000 with the full lyrics and display the text 60000 in a vehicle. In this case, the lyrics may be displayed by shading each line in synchronization with the full song by using synchronization information. A highlighting method according to embodiments may include all methods, such as highlighting the size and thickness of a text in addition to a shading method.

When there is no full song lyrics information (i.e., when it is not possible to receive lyrics over a network), only a text 60001 may be displayed in the vehicle.

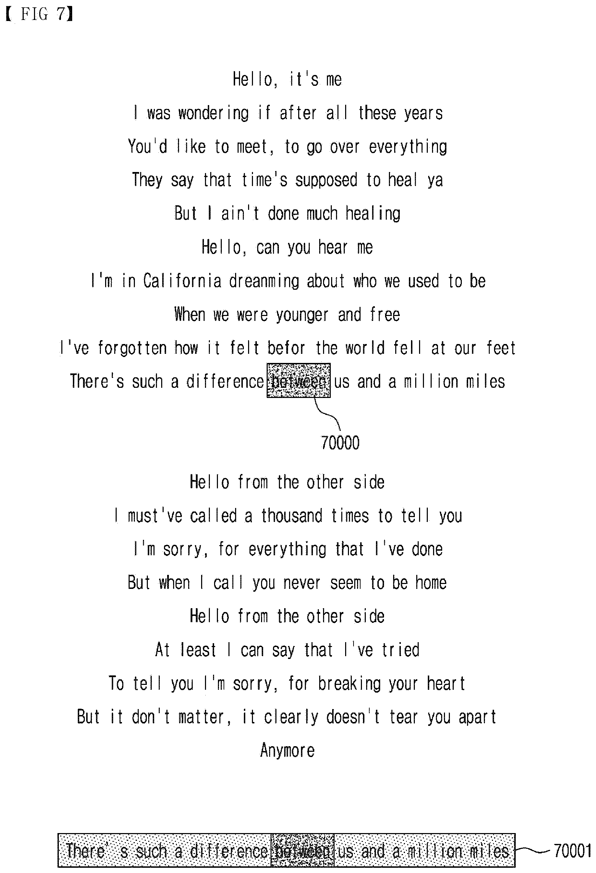

FIG. 7 illustrates a new service for radio data according to embodiments.

FIG. 7 illustrates a detailed example of the stream 3 described with reference to FIG. 4. The new service of the stream 3 may transmit time-synchronized information by transmitting tag information of the lyrics of the song currently listened to on the radio, which is RDS data. The radio data receiving device according to embodiments may display an index for each unit of a phoneme 70000 of song lyrics by receiving the tag information.

When the radio data receiving device according to embodiments receives information of the full song lyrics over a network, 'between' as the phoneme 70000 may be shaded. A highlighting method according to embodiments may include all methods, such as highlighting the size and thickness of a text in addition to a shading method.

However, when the information of the full song lyrics is not received over the network, only 'between' as a phoneme 70001 may be shaded in a line containing 'between' as the phoneme 70000.

Here, the time synchronization information is required because a phoneme length of the corresponding 'between' 70000 and 70001) is very short. A radio data transmitting device according to embodiments may transmit RDS data based on the RDS time information transmission standard.

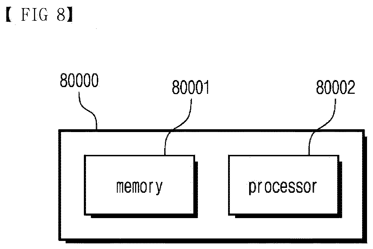

FIG. 8 illustrates a radio data receiving device according to embodiments.

FIG. 8 shows a radio data receiving device 80000. FIG. 8 may correspond to a radio data transmitting device.

A memory 80001 may store information for processing RDS data.

A processor 80002 may be connected to the memory 80001 and may be configured to perform operations according to the embodiments described above.

The processor 80002 may be configured to receive a zeroth stream based on a first frequency band for a radio data system (RDS), receive a first stream based on a second frequency band in which the RDS is extended, receive a second stream based on a third frequency band in which the RDS is extended, receiving a third stream based on a fourth frequency band in which the RDS is extended, and provide a service about RDS data based on at least one of the first stream, the second stream, or the third stream.

Referring to FIG. 4, with respect to a new RDS2 data service, the zeroth stream may include music data of the RDS data, the first stream may include address information about the full lyrics of the music data, the second stream may include a line-by-line text of the lyrics of the music data, and the third stream may include syllable and synchronization information of the line-by-line text of the lyrics of the music data.

Referring to FIG. 5, with respect to a new service (full lyrics), the processor may be further configured to obtain the full lyrics based on the address information about the full lyrics of the music data included in the first stream and display the obtained full lyrics.

Referring to FIG. 6, with respect to the new service (line-by-line text of lyrics), the processor may be further configured to display the line-by-line text together with the lyrics based on the line-by-line text of the lyrics of the music data included in the second stream or display only the line-by-line text.

Referring to FIG. 7, with respect to the new service (syllable unit of lyrics), the processor may be further configured to display the syllable together with the lyrics based on the syllable of the line-by-line text of the lyrics of the music data included in the third stream or to display only the syllable, and in this case, the syllable may be time-synchronized based on synchronization information included in the third stream.

A flowchart of a receiving method performed by a radio data receiving device may include receiving a zeroth stream based on a first frequency band about a radio data system (RDS), receiving a first stream based on a second frequency band in which the RDS is extended, receiving a second stream based on a third frequency band in which the RDS is extended, receiving a third stream based on a fourth frequency band in which the RDS is extended, and providing a service about RDS data based on at least one of the first stream, the second stream, or the third stream.

A radio data transmitting method for performing a reverse process of the radio data receiving method may have the following flowchart.

The radio data transmitting method may include transmitting a zeroth stream based on a first frequency band of a radio data system (RDS), transmitting a first stream based on a second frequency band in which the RDS is extended, transmitting a second stream based on a third frequency band in which the RDS is extended, and transmitting a third stream based on a fourth frequency band in which the RDS is extended, and in this case, the zeroth stream may include music data of the RDS data, the first stream may include address information about the full lyrics of the music data, the second stream may include a line-by-line text of the lyrics of the music data, and the third stream may include syllable and synchronization information of the line-by-line text of the lyrics of the music data.

According to embodiments, various additional services for RDS data may be visually and auditorily provided to a driver of a vehicle by efficiently using a frequency bandwidth.

Embodiments have been described from the method and/or device perspective, and descriptions of methods and devices may be applied so as to complement each other.

Although the accompanying drawings have been described separately for simplicity, it is possible to design new embodiments by merging the embodiments illustrated in the respective drawings. Designing a recording medium readable by a computer on which programs for executing the above-described embodiments are recorded as needed by those skilled in the art also falls within the scope of the appended claims and their equivalents. The devices and methods according to embodiments may not be limited by the configurations and methods of the embodiments described above. Various modifications can be made to the embodiments by selectively combining all or some of the embodiments. Although preferred embodiments have been described with reference to the drawings, those skilled in the art will appreciate that various modifications and variations may be made in the embodiments without departing from the spirit or scope of the disclosure described in the appended claims. Such modifications are not to be understood individually from the technical idea or perspective of the embodiments.

Various elements of the devices of the embodiments may be implemented by hardware, software, firmware, or a combination thereof. Various elements in the embodiments may be implemented by a single chip, for example, a single hardware circuit. According to embodiments, the components according to the embodiments may be implemented as separate chips, respectively. According to embodiments, at least one or more of the components of the device according to the embodiments may include one or more processors capable of executing one or more programs. The one or more programs may perform any one or more of the operations/methods according to the embodiments or include instructions for performing the same. Executable instructions for performing the method/operations of the device according to the embodiments may be stored in a non-transitory CRM or other computer program products configured to be executed by one or more processors, or may be stored in a transitory CRM or other computer program products configured to be executed by one or more processors. In addition, the memory according to the embodiments may be used as a concept covering not only volatile memories (e.g., RAM) but also nonvolatile memories, flash memories, and PROMs. In addition, it may also be implemented in the form of a carrier wave, such as transmission over the Internet. In addition, the processor-readable recording medium may be distributed to computer systems connected over a network such that the processor-readable code may be stored and executed in a distributed fashion.

In this specification, the term "/" and "," should be interpreted as indicating "and/or." For instance, the expression "A/B" may mean "A and/or B." Further, "A, B" may mean "A and/or B." Further, "A/B/C" may mean "at least one of A, B, and/or C." Also, "A/B/C" may mean "at least one of A, B, and/or C." Further, in this specification, the term "or" should be interpreted as indicating "and/or." For instance, the expression "A or B" may mean 1) only A, 2) only B, or 3) both A and B. In other words, the term "or" used in this document should be interpreted as indicating "additionally or alternatively."

Terms such as first and second may be used to describe various elements of the embodiments. However, various components according to the embodiments should not be limited by the above terms. These terms are only used to distinguish one element from another. For example, a first user input signal may be referred to as a second user input signal. Similarly, the second user input signal may be referred to as a first user input signal. Use of these terms should be construed as not departing from the scope of the various embodiments. The first user input signal and the second user input signal are both user input signals, but do not mean the same user input signals unless context clearly dictates otherwise.

The terms used to describe the embodiments are used for the purpose of describing specific embodiments, and are not intended to limit the embodiments. As used in the description of the embodiments and in the claims, the singular forms "a", "an", and "the" include plural referents unless the context clearly dictates otherwise. The expression "and/or" is used to include all possible combinations of terms. The terms such as "includes" or "has" are intended to indicate existence of figures, numbers, steps, elements, and/or components and should be understood as not precluding possibility of existence of additional existence of figures, numbers, steps, elements, and/or components. As used herein, conditional expressions such as "if" and "when" are not limited to an optional case and are intended to be interpreted, when a specific condition is satisfied, to perform the related operation or interpret the related definition according to the specific condition.

Operations according to the embodiments described in this specification may be performed by a transmission/reception device including a memory and/or a processor according to embodiments. The memory may store programs for processing/controlling the operations according to the embodiments, and the processor may control various operations described in this specification. The processor may be referred to as a controller or the like. In embodiments, operations may be performed by firmware, software, and/or a combination thereof. The firmware, software, and/or a combination thereof may be stored in the processor or the memory.

The operations according to the above-described embodiments may be performed by the transmission device and/or the reception device according to the embodiments. The transmission/reception device includes a transmitter/receiver configured to transmit and receive media data, a memory configured to store instructions (program code, algorithms, flowcharts and/or data) for a process according to embodiments, and a processor configured to control operations of the transmission/reception device.

The processor may be referred to as a controller or the like, and may correspond to, for example, hardware, software, and/or a combination thereof. The operations according to the above-described embodiments may be performed by the processor.

The radio data transmitting and receiving method and device according to embodiments may efficiently provide additional services related to radio data for a driver and passenger of a vehicle.

The radio data transmitting and receiving method and device according to embodiments may provide various information related to radio data in real time in a vehicle.

## Claims

1. A radio data receiving apparatus comprising:
a memory; and
a processor operatively connected to the memory,
wherein the processor is configured to:
receive a zeroth stream based on a first frequency band about a radio data system (RDS);
receive a first stream based on a second frequency band in which the RDS is extended;
receive a second stream based on a third frequency band in which the RDS is extended;
receive a third stream based on a fourth frequency band in which the RDS is extended; and
provide a service about RDS data based on at least one of the first stream, the second stream, or the third stream.

2. The radio data receiving apparatus of claim 1,
wherein the zeroth stream includes music data of the RDS data,
wherein the first stream includes address information about full lyrics of the music data,
wherein the second stream includes a line-by-line text of lyrics of the music data, and
wherein the third stream includes syllable and synchronization information of the line-by-line text of the lyrics of the music data.

3. The radio data receiving apparatus of claim 2, wherein, in the providing of the service, the processor is further configured to obtain the full lyrics based on the address information of the full lyrics of the music data included in the first stream, and display the obtained full lyrics.

4. The radio data receiving apparatus of claim 2 or 3, wherein, in the providing of the service, the processor is further configured to, based on the line-by-line text of the lyrics of the music data included in the second stream, display the line-by-line text together with the lyrics.

5. The radio data receiving apparatus of claim 2 or 3, wherein, in the providing of the service, the processor is further configured to, based on the line-by-line text of the lyrics of the music data included in the second stream, display only the line-by-line text.

6. The radio data receiving apparatus of any one of claims 2 to 5,
wherein, in the providing of the service, the processor is further configured to, based on a syllable of the line-by-line text of the lyrics of the music data included in the third stream, display the syllable together with the lyrics, and
wherein the syllable is time-synchronized based on synchronization information included in the third stream.

7. The radio data receiving apparatus of any one of claims 2 to 5,
wherein, in the providing of the service, the processor is further configured to, based on a syllable of the line-by-line text of the lyrics of the music data included in the third stream, display only the syllable, and
wherein the syllable is time-synchronized based on synchronization information included in the third stream.

8. A radio data receiving method comprising:
receiving, by a processor, a zeroth stream based on a first frequency band about a radio data system (RDS);
receiving, by the processor, a first stream based on a second frequency band in which the RDS is extended;
receiving, by the processor, a second stream based on a third frequency band in which the RDS is extended;
receiving, by the processor, a third stream based on a fourth frequency band in which the RDS is extended; and
providing, by the processor, a service about RDS data based on at least one of the first stream, the second stream, or the third stream.

9. The radio data receiving method of claim 8,
wherein the zeroth stream includes music data of the RDS data,
wherein the first stream includes address information about full lyrics of the music data,
wherein the second stream includes a line-by-line text of lyrics of the music data, and
wherein the third stream includes syllable and synchronization information of the line-by-line text of the lyrics of the music data.

10. The radio data receiving method of claim 9, wherein the providing of the service includes:
obtaining, by the processor, the full lyrics based on the address information of the full lyrics of the music data included in the first stream; and
displaying, by the processor, the obtained full lyrics.

11. The radio data receiving method of claim 9 or 10, wherein the providing of the service includes, based on the line-by-line text of the lyrics of the music data included in the second stream, displaying the line-by-line text together with the lyrics.

12. The radio data receiving method of claim 9 or 10, wherein the providing of the service includes, based on the line-by-line text of the lyrics of the music data included in the second stream, displaying only the line-by-line text.

13. The radio data receiving method of any one of claims 9 to 12,
wherein the providing of the service includes, based on a syllable of the line-by-line text of the lyrics of the music data included in the third stream, displaying the syllable together with the lyrics, and
wherein the syllable is time-synchronized based on synchronization information included in the third stream.

14. The radio data receiving method of any one of claims 9 to 12,
wherein the providing of the service includes, based on a syllable of the line-by-line text of the lyrics of the music data included in the third stream, displaying only the syllable, and
wherein the syllable is time-synchronized based on synchronization information included in the third stream.

15. A radio data transmitting method comprising:
transmitting a zeroth stream based on a first frequency band about a radio data system (RDS);
transmitting a first stream based on a second frequency band in which the RDS is extended;
transmitting a second stream based on a third frequency band in which the RDS is extended; and
transmitting a third stream based on a fourth frequency band in which the RDS is extended,
wherein the zeroth stream includes music data of the RDS data,
wherein the first stream includes address information about full lyrics of the music data,
wherein the second stream includes a line-by-line text of lyrics of the music data, and
wherein the third stream includes syllable and synchronization information of the line-by-line text of the lyrics of the music data.
